# EUROPÄISCHE PATENTSCHRIFT

(11) **EP 1 743 692 B1**
(45) Veröffentlichungstag und Bekanntmachung des Hinweises auf die Patenterteilung: **21.04.2010**
(21) Anmeldenummer: 05015246.1
(22) Anmeldetag: 13.07.2005
(51) Int. Cl.: B01F 7/16, B01F 7/18, B01F 15/00, B01F 3/04, B01F 13/02, C12C 7/06

(54) **Rührwerk sowie dessen Verwendung**
Agitator device and its use
Dispositif d'agitation et son utilisation

(43) Veröffentlichungstag der Anmeldung: 17.01.2007
(73) Patentinhaber: KRONES Aktiengesellschaft, 93073 Neutraubling (DE)
(72) Erfinder: Kammerloher, Helmut, 85354 Freising (DE)
(74) Vertreter: Grünecker, Kinkeldey, Stockmair & Schwanhäusser Anwaltssozietät

(56) Entgegenhaltungen:
- EP-A- 1 363 098
- WO-A-02/12433
- DE-A1- 4 035 228
- RU-C2- 2 200 757
- US-A- 4 491 421
- PATENT ABSTRACTS OF JAPAN Bd. 1998, Nr. 12, 31. Oktober 1998 (1998-10-31) -& JP 10 179124 A (SAPPORO BREWERIES LTD), 7. Juli 1998 (1998-07-07)

## Beschreibung

Die Erfindung bezieht sich auf ein Rührwerk für Lebensmittel, das besonders geeignet ist zum Einsatz bei Maisch- und/oder Würzebehälter für die Bierherstellung.

Die EP 1 363 098 beschreibt ein Rührwerk für eine Wärmebehandlung einer fetthaltigen Masse, beispielsweise einer schokoladenähnlichen Masse oder einer Schokoladenmasse mit Kakaobutter. Das Rührwerk enthält einen Rührfläche, die mit einer Mehrzahl zueinander beabstandeter Erhebungen und/oder Vertiefungen versehen ist. Die Erhebungen sind in Form von vertikal abstehenden Leitstegen oder -noppen vorgesehen. Die Stege und Noppen sind so ausgebildet, dass sie als Hindernisse für die Rührbewegung dienen und die zu rührende Masse zerteilen. Darüber hinaus sollen sie eine gewisse Leitfunktion ausüben, um die gewünschte Auf- und Abwärtsbewegung der Masse und die Entleerung des Rührbehälters zu fördern.

Die WO02/12433 betrifft ein Gefäß für die Bierherstellung, das sowohl zum Maischen als auch zum Würzekochen eingesetzt wird. Im Gefäß ist ein Rührwerk vorgesehen, an dessen Oberseite vorstehende Rührflächen und an dessen Unterseite ein den Ablauf frei räumendes Rührelemente vorsteht. Die spezielle Konstruktionsausgestaltung dieser Rührhilfen ist jedoch nicht beschrieben.

Dem Rührwerk in Gefäßen für die Lebensmittelindustrie, insbesondere in Maischpfannen oder Maischbottichen kommt besondere Bedeutung zu. So muss beispielsweise beim Maischen die Dimensionierung des Rührwerks sorgfältig auf die speziellen Gegebenheiten im Betrieb abgestellt werden, damit die relative Umfangsgeschwindigkeit des Rührwerks einen bestimmten Betrag (maximal 3 m/s) nicht übersteigt, da sonst an den Maischeteilen Scherkräfte auftreten, die die Inhaltsstoffe der Maische verändern können. Andererseits verringert sich natürlich die Rührwirkung und/oder verlängert sich die Rührzeit, wenn die Umfangsgeschwindigkeit unter das verträgliche Maß reduziert wird. Des weiteren reduziert sich der Wärmestrom, und das Fouling an den Heizflächen nimmt zu.

Der Erfindung liegt die Aufgabe zugrunde, ein Rührwerk zu schaffen, das eine verbesserte Rührwirkung aufweist.

Die Aufgabe wird durch die im Anspruch 1 angegebenen Merkmale gelöst.

Durch die erfindungsgemäße Ausgestaltung wird eine Rührfläche geschaffen, die durch ihre Unebenheiten, die sich durch Erhebungen und Vertiefungen ausdrückt, auch bei relativ geringen, begrenzten Geschwindigkeiten Turbulenzen erzeugt und somit den Rühreffekt verbessert. Darüber hinaus wird bei Rühraufgaben, die gleichzeitig eine Stoffumsetzung bewirken, wie dies beispielsweise in Maischpfannen oder - bottichen der Fall ist, die Stoffumsetzung wesentlich verbessert.

Vorteilhafte Weiterbildungen der Erfindung sind den Unteransprüchen zu entnehmen.

Wenn die Unebenheiten im Wesentlichen gleichmäßig über die Rührfläche verteilt sind, ist der Rühreffekt besser voraussehbar und besser reproduzierbar. Dies gilt insbesondere dann, wenn alle Erhebungen und/oder alle Vertiefungen im Wesentlichen identisch sind.

Ein kontinuierlicher Verlauf der Erhebungen und/oder Vertiefungen und ein kontinuierlicher Übergang zwischen benachbarten Erhebungen und Vertiefungen verbessert die Rührwirkung weiter.

Die Rührfläche ist bevorzugt auf einem doppelwandigen Bauteil vorgesehen, das aus einer ersten und einer zweiten Platte bzw. Blech hergestellt wurde. Die Platten wurden über beabstandete Verbindungsstellen miteinander verbunden und anschließend wenigstens eine Platte durch Aufbringen eines Drucks zwischen die Platten an den unverbundenen Stellen aufgewölbt. Auf diese Weise kann die Ausgestaltung, die Größe und die gegenseitigen Abstände der Erhebungen und/oder Vertiefungen genau gesteuert werden.

Das erfindungsgemäße Rührwerk enthält bevorzugt eine erste und eine zweite Rührfläche, die durch einen für Rührgut durchgängigen Spalt voneinander getrennt sind. Wenigstens eine der Rührflächen ist dabei mit Unebenheiten versehen.

Die Vorteile der erfindungsgemäß ausgebildeten Rührfläche kommen besonders gut zur Geltung, wenn die Rührfläche auf einem schaufelartig gewölbten Rührflügel angeordnet ist, der über einen Arm mit einer Drehachse verbunden ist.

Ausführungsbeispiele der Erfindung werden nachfolgend anhand der Zeichnungen näher erläutert. Es zeigen:
- Fig. 1: eine schematische Darstellung eines Rührgefäßes mit einem erfindungsgemäß ausgebildeten Rührwerk,
- Fig. 2: den Schnitt II-II aus Fig. 1,
- Fig. 3: eine vergrößerte, perspektivische Ansicht eines Rührflügels,
- Fig. 4: eine perspektivische Ansicht eines Rührflügels von unten,
- Fig. 5: eine schematische, perspektivische Darstellung einer Rührfläche des erfindungsgemäßen Rührwerks,
- Fig. 6: den Schnitt IV-IV aus Fig. 2,
- Fig. 7: die Draufsicht auf ein erstes Muster der Unebenheiten,
- Fig. 8: die Draufsicht auf ein zweites Muster der Unebenheiten, und
- Fig. 9: die Draufsicht auf ein drittes Muster der Unebenheiten.

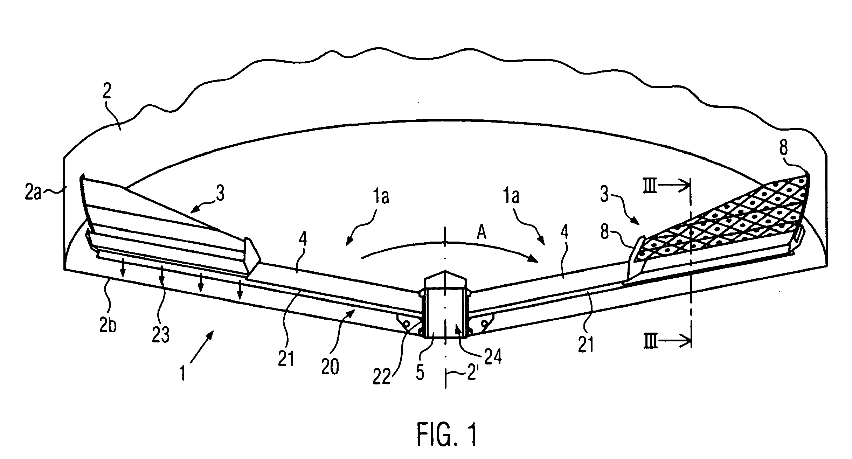

In Fig. 1 ist in schematischer, perspektivischer Darstellung ein Ausführungsbeispiel eines erfindungsgemäßen Rührwerks 1 ersichtlich, das in einem Rührbehälter 2 angeordnet ist. Das erfindungsgemäße Rührwerk 1 ist im dargestellten Ausführungsbeispiel als Rührwerk für einen Behälter für ein feste und flüssige Bestandteile enthaltendes Rührgut, insbesondere für die Bierbereitung, d.h. für einen Maisch- und/oder Würzebehälter, insbesondere eine Maischpfanne oder ein Maischbottich ausgelegt. Die Erfindung ist jedoch auch für Fest-/Flüssig-Mischungen oder viskose Medien in der Lebensmitteltechnik allgemein einsetzbar.

Der Rührbehälter 2 des dargestellten Ausführungsbeispiels enthält eine im Wesentlichen zylindrische Seitenwand 2a und einen kegeligen Boden 2b, der im Bereich der Mittelachse 2' des Rührbehälters 2 seinen tiefsten Punkt aufweist.

Im dargestellten Ausführungsbeispiel enthält das Rührwerk 1 Rührwerkzeuge 1a, d.h. zwei Rührflügel 3, die im Wesentlichen identisch ausgebildet sind und über jeweils einen Arm 4 und eine gemeinsame Nabe 5 mit einem Drehantrieb derart verbunden sind, dass sie in Richtung des Pfeiles A um die Mittelachse 2' drehend angetrieben werden können.

In Radialrichtung bezüglich des Rührbehälters 2 sind die Rührflügel 3 kürzer als der Durchmesser D des Rührbehälters 2. Die beiden Arme 4 mit ihren Rührflügeln 3 sind aneinander gegenüberliegenden der Mittellinie 2' angeordnet und erstrecken sich über eine Länge von vorzugsweise 0,5D bis 0,95D, bevorzugt 0,8D.

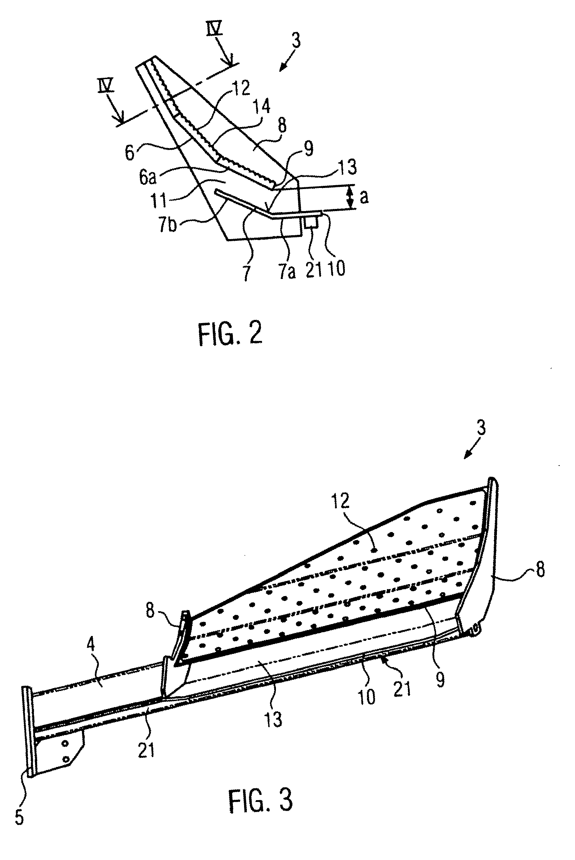

Beide Rührflügel 3 sind im Wesentlichen identisch, so dass nachfolgend ein Rührflügel 3 beschrieben wird. Wie auch in Verbindung mit den Fig. 2 bis 4 ersichtlich, ist der Rührflügel 3 im Wesentlichen trapezförmig ausgebildet, wobei er seine geringsten Abmessungen in Drehrichtung A in der Nähe der Befestigung am Arm 4 und seine größte Abmessung in Drehrichtung A an seinem der Wandung 2a zugewandten, freien Ende aufweist.

Der Rührflügel 3 enthält zwei im Wesentlichen plattenförmige Rührelemente 6, 7, die in einem Abstand a übereinanderliegend mit Hilfe von Befestigungswangen 8 sowohl miteinander als auch mit dem Arm 4 verbunden sind. Jedes der Rührelemente 6, 7 enthält an seinem unteren, d.h. bodennächsten Ende, eine in Drehrichtung A vorlaufende Kante 9 bzw. 10, die im Wesentlichen radial zur Mittellinie 2' und im Wesentlichen parallel zum Boden 2b verlaufen. Die vorlaufende Kante 9 des oberen Rührelementes 6 ist in Drehrichtung A hinter die vodaufende Kante 10 des unteren Rührelementes 7 zurückversetzt. Das untere Rührelement 7 enthält zwei Bereiche 7a, 7b, wobei der Bereich 7a mit der vorlaufenden Kante 10 versehen ist und etwa parallel bis leicht ansteigend (bis 10°) zum Boden 2b verläuft und der Bereich 7b nach hinten, d.h. entgegen der Drehrichtung A stärker ansteigt.

Die freie Kante 9 des oberen Rührelementes 6 befindet sich im Wesentlichen im Abstand a oberhalb des Übergangs zwischen dem Bereich 7a und dem Bereich 7b des unteren Rührelementes 7.

Das obere Rührelement 6 ist in Drehrichtung A länger als das untere Rührelement 7, und ist im Wesentlichen schaufelartig gekrümmt. Dabei verläuft der sich an die freie Kante 9 des Rührelements 6 anschließende Bereich 6a über mindestens die Länge des Bereichs 7b, und bevorzugt über die gesamte Länge des Bereichs 7b des unteren Rührelementes 7 im Wesentlichen parallel zum Bereich 7b. Bevorzugt hat jedoch die freie Kante 9 den größten Abstand a zum Bereich 7b, und die Bereiche 6a und 7b nähern sich nach hinten unter einem Winkel von etwa 4° aneinander an. Zwischen dem oberen Rührelement 6 und dem unteren Rührelement 7 erstreckt sich somit ein Spalt 11, der die in Drehrichtung A vordere Seite des Rührflügels 3 mit der hinteren Seite verbindet und so bemessen ist, dass Rührgut hindurchtreten kann. Daran anschließend krümmt sich das obere Rührelement 6 nach oben hinten, was entweder durch eine entsprechende Biegung oder, wie im dargestellten Ausführungsbeispiel, durch Aneinanderreihen einer Mehrzahl von Segmenten im Winkel zueinander verwirklicht werden kann.

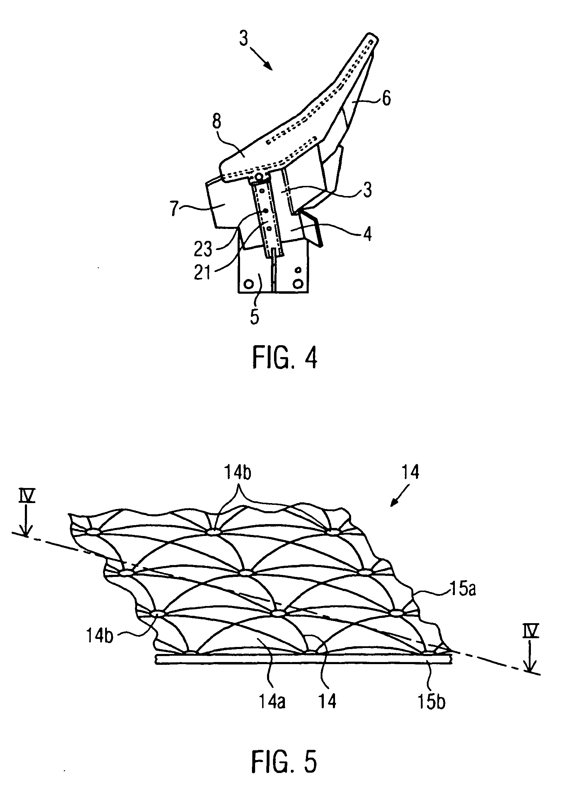

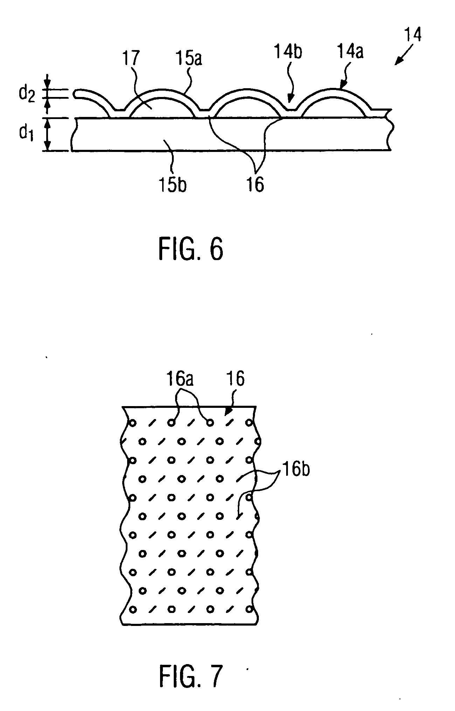

Die beim Drehen der Rührflügel 3 in Drehrichtung A gegen das Rührgut arbeitende Fläche 12 (oberes Rührelement 6) bzw. 13 (unteres Rührelement 7) wird nachfolgend jeweils als Rührfläche bezeichnet. Zumindest die Rührfläche 12 am Rührelement 6, d.h. am oberen, längeren Rührelement, ist mit einer Vielzahl insgesamt mit 14 bezeichneten Unebenheiten versehen, während die Rührfläche 13 des unteren Rührelements 7 bevorzugt glatt ist. Es ist jedoch auch möglich beide Rührflächen 12 und 13 sowie u.U. auch eine oder beide Rückseiten der Rührelemente 6 bzw. 7 mit den Unebenheiten zu versehen. Die Unebenheiten 14 sind so ausgebildet, dass sie für die Erzeugung von Mikroturbulenzen beim Anströmen mit dem Rührgut sorgen und somit die Durchmischung des Rührgutes verbessern. Zu diesem Zweck unterbrechen die Unregelmäßigkeiten eine glatte ebene Fläche, bevorzugt in einem Ausmaß, dass die Rührfläche 12 keine flachen, ebenen Bereiche aufweist; die Unregelmäßigkeiten 14 somit bevorzugt die Rührfläche 12 vollständig bedecken. Die Unregelmäßigkeiten 14 enthalten Erhebungen 14a bzw. Vertiefungen 14b, wobei jedoch mit den Begriffen "Erhebungen" und "Vertiefungen", unabhängig von deren Herstellung, ein mehr oder weniger großer Abstand zu einer gedachten Bezugsebene gemeint ist, wie dies insbesondere in den Fig. 5 und 6 näher dargestellt ist. Es sind eine Vielzahl von Erhebungen und Vertiefungen vorgesehen, wobei die Anzahl auf die Größe der Rührfläche 12 und/oder das gewünschte Rührergebnis bei einem speziellen Rührgut abgestimmt wird. Die Anzahl ist größer als 2 und kann bis zu 10 oder bis zu 50 oder bis zu 100 oder mehr betragen. Wie in den Fig. 5 und 6 gezeigt sind die Erhebungen 14a kissenförmig gewölbt und gehen kontinuierlich in die Vertiefungen 14b über. In dem in Fig. 5 dargestellten Muster der Unebenheiten 14 sind die Vertiefungen 14b im Wesentlichen punktförmig ausgeführt und gleichmäßig in waagerechten und senkrechten, parallelen Reihen angeordnet, wobei sowohl die Reihen als auch die Vertiefungen 14b innerhalb der Reihen zueinander beabstandet sind. Die Abstände sind bevorzugt gleich, so dass sich ein gleichmäßiges Muster von Erhebungen 14a ergibt, wobei in Fig. 5 der Verlauf der Scheitellinien bzw. der Linien mit Krümmungsumkehr dargestellt ist. Die Unregelmäßigkeiten 14 nach dem Muster gemäß Fig. 5 sind bevorzugt so auf der Rührfläche 12 angeordnet, dass die freie Kante 9 durch die Scheitelpunkte nebeneinanderliegender Erhöhungen 14a verläuft, wie dies in Fig. 6 dargestellt ist.

Die Unebenheiten 14 werden bevorzugt hergestellt, indem zwei Bleche oder Platten 15a, 15b mit bevorzugt unterschiedlicher Festigkeit aufeinandergelegt und an den Stellen der späteren Vertiefungen miteinander verbunden werden. Im dargestellten Ausführungsbeispiel wird der Festigkeitsunterschied durch eine geringere Dicke d2 der Platte 15a gegenüber einer größeren Dicke d1 der Platte 15b erreicht. Im Ausführungsbeispiel der Fig. 5 und 6 haben diese Verbindungsstellen 16 im Wesentlichen Punkt-, oder Linsen- oder Ringform. Weiterhin werden die beiden Platten 15a, 15b auch in ihren Randbereichen miteinander druckdicht verbunden. Wird dann ein Druckmittel zwischen die beiden Platten 15a, 15b eingeleitet, so wölbt sich die Platte mit der geringeren Festigkeit, was bei gleichem Material die Platte 15a bei der kleineren Stärke d2 ist, zwischen den Verbindungsstellen 16 durch bleibende Verformung nach außen, wobei sich Hohlräume 17 bilden, die die Erhebungen 14a definieren. Der Druck wird so bemessen, dass die zweite Platte 15b mit der größeren Stärke d1 im Wesentlichen eben bleibt und so die ebene Rückseite des Rührelements 6 bildet. Es ist jedoch auch möglich, die Platten 15a, 15b und/oder den aufgebrachten Druck so auszuwählen, dass sich beide Platten 15a, 15b entweder im gleichen Maße oder unterschiedlich stark auswölben.

Beide Platten 15a, 15b sind aus einem Werkstoff, der einerseits gegen das Rührgut chemisch beständig ist und eine zum Rühren ausreichende Festigkeit aufweist, sowie, bei Verwendung zum Rühren von Lebensmitteln, lebensmittelecht ist. Ein bevorzugtes Material für beide Platten 15a, 15b ist ein rostfreier Edelstahl, insbesondere ein Chrom-Nickel-Stahl. Die Verbindungsstellen 16 werden bevorzugt durch Schweißen hergestellt.

Eine ausreichende Festigkeit vorausgesetzt, kann das Rührelement 6 allein durch die beiden Platten 15a, 15b (Fig. 6) gebildet werden. Die Dicke d1 der Platte 15b kann zwischen 0,5 bis 10,5 betragen, während die kleinere Wandstärke d2 der Platte 15a zwischen 0,5 und 10 mm betragen kann.

Das Muster der Unebenheiten 14 kann im Hinblick auf Größe und Anordnung sowie der Regelmäßigkeit der Verteilung der Erhebungen 14a bzw. der Vertiefungen 14b verändert werden. Auch die Form der Verbindungsstellen 16 kann verändert werden. So können die Verbindungsstellen 16 punkt- bzw. ringförmige Verbindungsstellen 16a und linienförmige Verbindungsstellen 16b umfassen, wie dies in den Fig. 7 bis 9 dargestellt ist. So kann das Muster der Unebenheiten 14, wie Fig. 7 zeigt, Reihen von Verbindungsstellen 16 aufweisen, in denen schräggestellte, linienförmige Verbindungsstellen 16 sich mit punkt- oder ringförmigen Verbindungsstellen 16a abwechseln und die Reihen regelmäßig oder unregelmäßig gegeneinander versetzt sind.

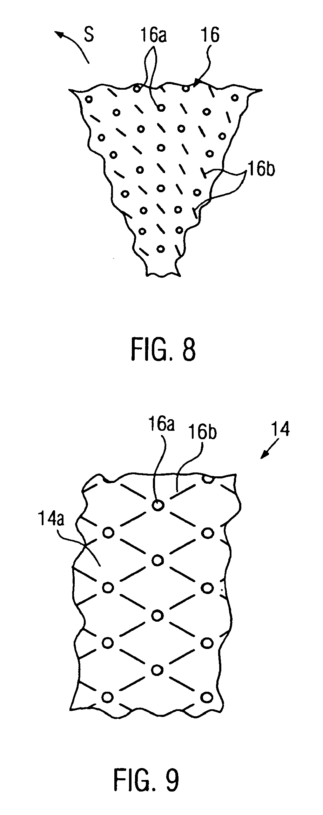

Die Unebenheiten 14 können auch gezielt so angeordnet werden, dass eine bestimmte Strömungsrichtung S gefördert wird, wie dies beispielsweise in Fig. 8 gezeigt ist. Hier sind die linienförmigen Verbindungsstellen 16b in eine zu fördernde Strömungsrichtung S in spiralig verlaufenden Reihen mit Abstand hintereinander angeordnet.

Fig. 9 zeigt ein Muster von Unebenheiten 14, das zu einer sehr gleichmäßigen Verteilung der Erhebungen 14a ohne Bevorzugung einer bestimmten Strömungsrichtung führt. Hier sind punkt- bzw. ringförmige Verbindungsstellen 16a stemförmig von jeweils vier linienförmigen Verbindungsstellen 16b umgeben.

Es ist offensichtlich, dass durch unterschiedliche Verteilung und unterschiedliche Formen der Verbindungsstellen 16 die unterschiedlichsten Muster, einschließlich sehr unregelmäßiger Muster von Unebenheiten 14 erzeugt werden können. So können die Erhebungen wellen- oder blasenförmig sein. Es ist weiterhin möglich, die Erhebungen 14a und/oder die Vertiefungen 14b an unterschiedlichen Stellen der Rührfläche 12 unterschiedlich groß oder unterschiedlich geformt auszubilden. Auch kann durch eine geeignete Ausrichtung der Vertiefungen und/oder der Erhöhungen zur freien Kante 9 der Rühreffekt in gewünschter Weise verändert werden.

Mit Unebenheiten versehene Flächen zur Herstellung eines Bodens und/oder einer Wandung des Rührbehälters wurden bereits in der nicht vorveröffentlichten EP 05 002 298.7 beschrieben, deren Offenbarungsgehalt hiermit durch Bezugnahme eingeschlossen wird. Dabei werden die zum Erzeugen der Erhebungen 14a eingeformten Hohlräume 17 gleichzeitig für eine Dampfverteilung im Inneren der Wandungen verwendet.

Für die Rührfläche der vorliegenden Erfindung können alle dort beschriebenen, mit Unebenheiten versehenen Flächen eingesetzt werden.

Die vorliegende Erfindung eignet sich besonders zur Herstellung eines Rührwerks für einen Rührbehälter, dessen Innenseiten ebenfalls mit Unebenheiten versehen ist, insbesondere an einen Rührbehälter, wie er in der nicht vorveröffentlichten EP 05 002 298.7 beschrieben wurde, wobei jedoch die Hohlräume 17 der Rührfläche vorzugsweise nicht zum Beheizen verwendet werden. Mit dieser Kombination wird eine besonders effektive Rührung und Durchmischung und bei dafür bestimmtem Rührgut, insbesondere bei Maische, auch eine verbesserte Stoffumsetzung erreicht. Dabei kann die Rührfläche mit den gleichen Unebenheiten wie Boden und/oder Wandung des Rührbehälters 2 oder mit in Form und/oder Anordnung und/oder Größe abweichenden Unebenheiten versehen sein.

Wie den Fig. 1 bis 4 zu entnehmen, ist das Rührwerk 1 mit einer Einrichtung 20 zum Einleiten von Fluiden versehen. Mit der Einrichtung 20 können fluide Zusätze während des Rührens in das Rührgut eingetragen werden. So kann beispielsweise Wasser einer bestimmten Temperatur zum Heizen oder Kühlen des Rührguts eingebracht werden. Es ist weiterhin möglich andere Zusatzmittel oder -stoffe, die im Rührgut fein verteilt werden müssen, über die erfindungsgemäße Einrichtung 20 einzubringen. So können beispielsweise, insbesondere bei der Bierherstellung, Enzyme oder Milchsäure, technisch oder natürlich, die beispielsweise zur Absenkung des pH-Wertes verwendet wird, oder andere Stoffe eingeleitet und fein verteilt werden. Wenn Heißwasser zugeführt wird, dann könnte dies bei der Bierherstellung beispielsweise ein Heißwasser sein, das aus Brüden rückgewonnen wurde.

Die Zufuhreinrichtung 20 enthält wenigstens eine sich um die Drehachse 2' drehende Verteilleitung 21, die eine Zufuhreinrichtung 22 mit wenigstens einer Auslassöffnung 23 verbindet. Die Auslassöffnung 23 dreht sich um die Drehachse 2'. Bevorzugt ist die Auslassöffnung 23 mit dem Arm 4 verbunden und wird bei der Drehung des Armes 4 mitgenommen. Im dargestellten Ausführungsbeispiel ist die Auslassöffnung direkt in der Verteilleitung 21 vorgesehen. Die Auslassöffnung 23 ist nach unten gerichtet. Die Zufuhreinrichtung 22 enthält eine Verteilkammer, die im Inneren der Nabe 5 ausgebildet ist und über eine Versorgungsleitung 24 von außerhalb des Rührbehälters 2 mit dem zu verteilenden Fluid beliefert wird.

Im dargestellten Ausführungsbeispiel sind bevorzugt beide Rührwerkzeuge 1a mit jeweils einer Verteilleitung 21 versehen, wobei nachfolgend nur die Einrichtung 20 eines der Rührwerkzeuge 1a beschrieben wird, wobei das andere Rührwerkzeug identisch ausgebildet ist. Die Verteilleitung 21 ist bevorzugt an der Unterseite des Arms 4 befestigt und erstreckt sich bevorzugt bis in den Bereich unterhalb des Rührflügels 3. Die Verteilleitung 21 weist eine Verbindung mit der Versorgungsleitung 24 auf, die bevorzugt durch die Verteilkammer 22 der Nabe 5 läuft.

Bevorzugt nur im Bereich der Rührflügel 3 sind eine Vielzahl Auslassöffnungen 23 vorgesehen. Die Auslassöffnungen 23 sind bevorzugt düsenartig ausgebildet. Die konstruktiv einfachste Lösung sind einfache, düsengroße Öffnungen in der Verteilleitung 21. Die Auslassöffnungen 23 sind bevorzugt senkrecht nach unten in Richtung auf den Boden 2b gerichtet, können jedoch in jede andere Richtung weisen oder es können Auslassöffnungen vorgesehen sein, die am gleichen Rührwerkzeug 1 a in unterschiedliche Richtungen weisen.

In einem praktischen Versuch wurden in das erfindungsgemäße Rührwerk 1 mit den mit Unebenheiten versehenen Rührflügeln und der Einrichtung 20 zum Zuführen von Fluiden Enzyme in Maische eindosiert. Es wurde festgestellt, dass die Enzyme in wenigen Sekunden in Rührgut verteilt werden konnten. Normalerweise dauert eine optimale Durchmischung bis zu 15 min.

In Abwandlung der beschriebenen und gezeichneten Ausführungsbeispiele können die Erhebungen und/oder Vertiefungen der Rührfläche auch auf andere Weise erzeugt werden, beispielsweise angeformt oder durch spanenden oder spanlose Verformung oder dgl. hergestellt werden. Die Form und die konstruktive Ausgestaltung des Rührwerks kann an die spezielle Rühraufgabe angepasst werden. Es ist weiterhin möglich, auch die untere Rührfläche mit Unebenheiten zu versehen. Schließlich ist die Erfindung auch für anders ausgebildete Rührbehälter einsetzbar. Die Zufuhreinrichtung für Fluide kann weiterhin nur an einem Rührwerkzeug angeordnet sein. Auslassöffnungen können über die gesamte radiale Ausdehnung der Rührwerkzeuge vorgesehen sein oder an bestimmten Stellen, auch außerhalb der Rührflügel konzentriert angeordnet werden. Statt zum Einspritzen geeignete, düsenartige Öffnungen können auch größere Öffnungen vorgesehen sein aus denen das Fluid ausläuft. Zwar ist zur bestimmungsgemäßen Funktion nur eine Auslassöffnung einsetzbar, bevorzugt sind jedoch mehrere Auslassöffnungen vorgesehen.

## Patentansprüche

1. Rührwerk (1), mit einer Rührfläche (12), die zumindest bereichsweise mit Unebenheiten (14) versehenen ist, **dadurch gekennzeichnet, dass** insbesondere für einen Maisch- und/oder Würzebehälter (2), die Unebenheiten (14) eine Mehrzahl zueinander beabstandeter, kissenartig gewölbter Erhebungen (14a) und/oder Vertiefungen (14b) enthalten.

2. Rührwerk nach Anspruch 1, **dadurch gekennzeichnet, dass** die Unebenheiten (14) im Wesentlichen gleichmäßig über die Rührfläche (12) verteilt sind.

3. Rührwerk nach Anspruch 1 oder 2, **dadurch gekennzeichnet, dass** alle Erhebungen (14a) und/oder alle Vertiefungen (14b) im Wesentlichen identisch sind.

4. Rührwerk nach einem der Ansprüche 1 bis 3, **dadurch gekennzeichnet, dass** die Rührflache (12) vollständig mit Erhebungen (14a) und Vertiefungen (14b) bedeckt ist.

5. Rührwerk nach einem der Ansprüche 1 bis 4, **dadurch gekennzeichnet, dass** die Erhebungen (14a) und Vertiefungen (14b) kontinuierlich ineinander übergehen.

6. Rührwerk nach einem der Ansprüche 1 bis 5, **dadurch gekennzeichnet, dass** die Rührfläche (12) aus einer ersten und einer zweiten Platte (15a, 15b) gefertigt ist, wobei die Platten (15a, 15b) über beabstandete Verbindungsstellen (16) miteinander verbunden sind, und zum Ausbilden der Unebenheiten (14) wenigstens eine der Platten (15a) zwischen den Verbindungsstellen (16) aufgewölbt ist.

7. Rührwerk nach einem der Ansprüche 1 bis 6, **dadurch gekennzeichnet, dass** eine erste und eine zweite Rührfläche (12, 13) vorgesehen ist, die durch einen für Rührgut durchgängigen Spalt (11) voneinander getrennt sind, wobei wenigstens eine der Rührflächen (12) mit den Unebenheiten (14) versehen ist.

8. Rührwerk nach einem der Ansprüche 1 bis 7, **dadurch gekennzeichnet, dass** die Rührfläche (12) auf einem schaufelartig gewölbten Rührflügel (3) angeordnet ist, der über einen Arm (4) mit einer Drehachse (2') verbunden ist.

9. Verwendung eines Rührwerks nach einem der Ansprüche 1 bis 8 für einen Rührbehälter (2) mit einer mit Unebenheiten (14) versehenen Bodeninnenfläche und/oder einer mit Unebenheiten (14) versehene Wandungs-Innenfläche.

## Claims

1. Stirring device (1) with a stirring surface (12) provided at least in sections with irregularities (14), **characterized in that** in particular for a mash- and/or wort vessel (2), the irregularities (14) contain a plurality of projections (14a) and/or depressions (14b) spaced from each other and curved like cushions.

2. Stirring device according to claim 1, **characterized in that** the irregularities (14) are essentially uniformly distributed across the stirring surface (12).

3. Stirring device according to claim 1 or 2, **characterized in that** all projections (14a) and/or all depressions (14b) are essentially identical.

4. Stirring device according to one of claims 1 to 3, **characterized in that** the stirring surface (12) is completely covered with projections (14a) and depressions (14b).

5. Stirring device according to one of claims 1 to 4, **characterized in that** the projections (14a) and depressions (14b) continuously pass to one another.

6. Stirring device according to one of claims 1 to 5, **characterized in that** the stirring surface (12) is made of a first and a second plate (15a, 15b), the plates (15a, 15b) being connected to one another via spaced junctions (16), and at least one of the plates (15a) being curved between the junctions (16) for forming the irregularities (14).

7. Stirring device according to one of claims 1 to 6, **characterized in that** a first and a second stirring surface (12, 13) are provided, which are separated by a gap (11) through which substance for stirring can pass, wherein at least one of the stirring surfaces (12) is provided with the irregularities (14).

8. Stirring device according to one of claims 1 to 7, **characterized in that** the stirring surface (12) is arranged on a stirrer blade (3) curved like a shovel which is connected with a rotary axle or axis (2') via an arm (4).

9. Use of a stirring device according to one of claims 1 to 8, in a stirring vessel (2) with an inner bottom surface provided with irregularities (14) and/or with an inner wall surface provided with irregularities (14).

## Revendications

1. Agitateur (1) comprenant une surface d'agitation (12) qui est munie, au moins par zones, de déformations (14), **caractérisé en ce que**, en particulier pour une cuve de trempe et/ou une cuve de moût (2), les déformations (14) contiennent une multitude d'élévations bombées en forme de coussins (14a) et/ou de renfoncements (14b), espacés les uns des autres.

2. Agitateur selon la revendication 1, **caractérisé en ce que** les déformations (14) sont distribuées essentiellement de manière uniforme sur la surface d'agitation (12).

3. Agitateur selon la revendication 1 ou 2, **caractérisé en ce que** toutes les élévations (14a) et/ou tous les renfoncements (14b) sont essentiellement identiques.

4. Agitateur selon l'une quelconque des revendications 1 à 3, **caractérisé en ce que** la surface d'agitation (12) est complètement recouverte d'élévations (14a) et de renfoncements (14b).

5. Agitateur selon l'une quelconque des revendications 1 à 4, **caractérisé en ce que** les élévations (14a) et les renfoncements (14b) se prolongent en continu les uns dans les autres.

6. Agitateur selon l'une quelconque des revendications 1 à 5, **caractérisé en ce que** la surface d'agitation (12) est réalisée à partir d'une première et d'une deuxième plaque (15a, 15b), les plaques (15a, 15b) étant reliées l'une à l'autre via des points de jonction espacés (16), au moins une des plaques (15a) étant bombée entre les points de jonction (16), pour la réalisation des déformations (14).

7. Agitateur selon l'une quelconque des revendications 1 à 6, **caractérisé en ce qu'**on prévoit une première et une deuxième surface d'agitation (12, 13) qui sont séparées l'une de l'autre par une fente continue (11) pour la matière à agiter, au moins une des surfaces d'agitation (12) étant munie des déformations (14).

8. Agitateur selon l'une quelconque des revendications 1 à 7, **caractérisé en ce que** la surface d'agitation (12) est disposée sur une ailette d'agitation (3) bombée à la manière d'une pelle, qui est reliée via un bras (4) à un axe de rotation (2').

9. Utilisation d'un agitateur selon l'une quelconque des revendications 1 à 8, pour un récipient d'agitation (2) comprenant une surface interne de base munie de déformations (14) et/ou une surface interne de paroi munie de déformations (14).
